# EUROPEAN PATENT APPLICATION

(11) **EP 4 652 965 A1**
(43) Date of publication of application: **26.11.2025**
(21) Application number: 24177923.0
(22) Date of filing: 24.05.2024
(51) Int. Cl.: A61D 19/02, A01N 1/02

(54) **TOWER FORMED BY OVERLAID TUBES WITH SPECIFIC CAVITIES FOR STORING PALLETS WITH SEMEN**

(71) Applicant: Bonfim Oliveira, Carlos Roberto, 38072-060 Uberaba MG (BR)
(72) Inventor: Bonfim Oliveira, Carlos Roberto, 38072-060 Uberaba MG (BR)
(74) Representative: Torner, Juncosa I Associats, SL

(57) **Abstract**

This refers to a dual-function tower (1), able to be taken to the canister (2) of cryogenic cylinders (3) for freezing semen, which consists of two tubes (5, 6) each with an oblong hollow making up a cavity (16) for easy withdrawal of the pallets (4), tubes (5, 6) these assembled together by means of ¼-turn threads (10, 11), such as on the cover (12), which due to their arrangement do not cause external bulges adversely affecting the automation of the process and promote perfect alignment of the cavities (16) upon assembly.

## Description

### INTRODUCTION

The present application for patent of invention refers to an unprecedented "Tower formed by overlaid tubes with specific cavities for storing pallets with semen", with two tubes that mounted form a tower without outer projections for storing pallets with animal semen making the industrial process and handling in the field by technicians and veterinarians more practical, simpler and more economical, benefitting the whole productive chain from the moment of semen collection.

### FIELD OF APPLICATION

The field of application of the invention is the veterinary sector, more specifically animal reproduction using stored semen.

### CONVICTION

People skilled in the art are aware that freezing semen is one of the best alternatives for maintaining and improving the genetic quality of breeds, that is, of herds. Besides producing characteristics of the animals, it has been possible to improve the sources of animal production in the sense of providing fast, simple and highly safe freezing.

The development of packaging to keep the the product at extreme temperatures (-196°C) requires theory analysis and deep study in the production, handling, transport and conservation of the product.

The market provides various products to meet the demands of consumers in relation to storing pallets. In containing pallets, globes are used and for orderly grouping of the globes, racks are used.

The work process for handling animal semen and freezing in the cryogenic cylinder occurs by packaging the pallets in the globes and subsequent positioning of two tubes, separately, in a support called rack. With the racks already mounted, duly identified by means of adhesives, they are forwarded to cryogenic cylinders where they are kept at extreme temperatures (-196°C). The racks are placed in canisters in the center of the cryogenic cylinder.

In this context, new technologies capable of making the globe/rack handling process more agile and safer both in the field and in the laboratory are welcome in the segment in question.

### STATE OF THE ART

The current state of the art anticipates some patent documents which refer to devices for packaging semen, such as document US 3130836 A entitled "Dispensing Rack" - characterized by comprising a support for globes resilient under cryogenic conditions comprising a hollow elongated unitary sheet metal body extending over an area of slightly greater than 180 degrees in cross section and having an open side delimited by opposed edge portions of said body, said edge portions being spaced apart a distance slightly less than the transverse dimension of the main portion of said body, said body formed with a plurality of longitudinally spaced access openings generally opposite said open side and distributed over substantially the full length of said rack.

The above document anticipates a rack for receiving the globes, which is endowed with various openings along its body, intended to serve as access for withdrawing the pallets containing the semen of the animal.

Document US 3904037 A entitled "Storage Units" - a storage unit for semen incorporates, in general, an elongated accommodation having a supporting element slidingly mounted for longitudinal movement relative thereto. The accommodation incorporates a tubular side wall which is substantially straight and open at its top end and at its bottom end. The supporting element can be made of any suitable material, such as, for example, steel plate or aluminum plate, and the like, and incorporates a substantially straight elongated body portion. At the other end of the body portion, a back element projects substantially perpendicularly therefrom.

The above document is by mountable, pluggable globes with hollow ends, in which the pallets are anchored on folds of the elongated body, there being no side access to said pallets.

Document PI 0603300-8 A entitled "Globe for storing bovine semen pallets" - characterized by comprising two thin aluminum tubes, open at one end, which are fixedly adapted on a conventional, elongated support presented in the form of a round semi-channel with latches at the ends, an end hole and a hole in the center, said thin tubes being disposed such that their open ends point towards the holes of the support.

The globe of the above document is comprised of two aluminum tubes separately mountable on a half-pipe support which plays the role of the rack, also made of aluminum, which, by the length generated, enables insertion thereof and maneuverability into the canister of the cryogenic cylinder. The constructivity and, consequently, the shape utilized in assembling the globes cause a series of technical limitations, starting with the time spent to put the tubes onto the supports, in addition to the risk of cutting the operator's hands because the material is aluminum, knowingly prone to cause injuries due to the burrs and sharp edges. The quota of non-matching end holes is also a technical limitation relative to the openings of the tubes, making it hard to grip the pallets with semen. Another negative point is the difficulty in identifying the globe whose concept does not enable the process to be automated (metal parts with points and edges are inevitably intertwined).

### OBJECTIVES OF THE INVENTION

It is an objective of the present invention to propose a tower formed by overlaid tubes with specific cavities for storing pallets with semen capable of performing two functions, that is, to pack the pallets and go straight to the canister of the freezing and storage tank, replacing the current racks and globes by a single product.

It is an objective of the present invention to propose a tower formed by overlaid tubes with specific cavities for withdrawing pallets with semen with a chestnut-type cover which besides protecting the pallets enables the printing thereof, in its upper part, by means of an accurate, industrial ink-jet printer, the technical information on quantity, breed of the animal, date and tracking of the packaged product and others that the manufacturer deems necessary. The printing can also be done on the bodies of the tubes (due to the regular cylindrical contour).

It is an objective of the present invention to propose a tower formed by overlaid tubes with specific cavities for storing pallets with semen, dispensing any type of support to keep them together, wherein the connection of two tubes gives rise to a tower with perfect coupling.

It is an objective of the present invention to propose a tower formed by overlaid tubes with specific cavities for storing pallets with semen capable of keeping the pallets frozen with technology commonly used in all the processes / steps of artificial insemination (production, freezing, transport and effective consumption) without neglecting the freezing quality with optimized automation and identification.

It is an objective of the present invention to propose a tower formed by overlaid tubes with specific cavities for storing pallets with semen that provide increased practicality in daily handling in packaging the pallets, both for laboratory technicians, immune to injuries, as well as in storing in the semen bank by the fact that it does not need any fastening support or guide.

It is an objective of the present invention to propose a tower formed by overlaid tubes with specific cavities for storing pallets with semen in biodegradable polymer, which is ecologically correct, and which withstands ambient temperatures and extreme temperatures of -196° without undergoing any modification.

It is an objective of the present invention to propose a tower formed by overlaid tubes with specific cavities for storing pallets with semen with closed bottom or bottom communicating with another tube.

It is an objective of the present invention to propose a tower formed by overlaid tubes with specific cavities for storing pallets with semen which due to their regular oblong contour facilitate gripping of the pallets.

It is an objective of the present invention to propose a tower formed by overlaid tubes with specific cavities for storing pallets with semen which due to internal threading, as well as cover fastening, does not create any type of external mechanical interference adversely affecting the automation process.

It is an objective of the present invention to propose a tower formed by overlaid tubes with specific cavities for storing pallets with semen having optimal cost x benefit ratio.

### SUMMARY OF THE INVENTION

The tower formed by overlaid tubes with specific cavities for storing pallets with semen refers to a dual-function product formed by a pair of independent tubes, for storing pallets with semen, overlaid and assembled together forming a tower whose length generated enables the direct utilization thereof in the canister of the cryogenic cylinder. The tubes have a ¼-turn thread at the top inner end and outer thread at the distal outer end, lowered relative to the body, as well as on the chestnut-type cover, with slots, not causing bulges along the length of the tower, and these ¼-turn threads establish the same alignment axis of the specific cavities for gripping the pallets with semen upon closing the tubes *per se.* Due to their regular perimeter, the cavities facilitate handling/gripping the pallets.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:

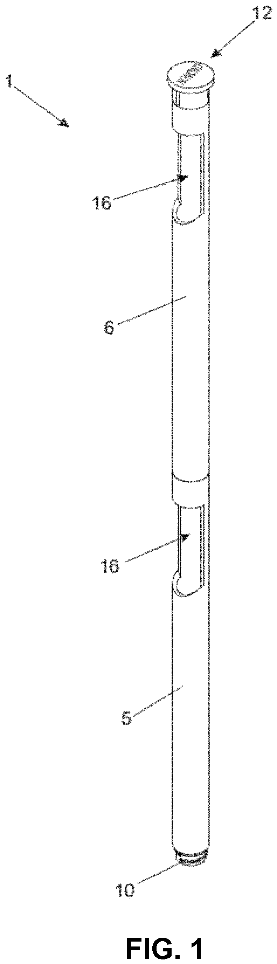

Figure 1: Perspective view of the tower formed by overlaid tubes with specific cavities for storing pallets with semen.

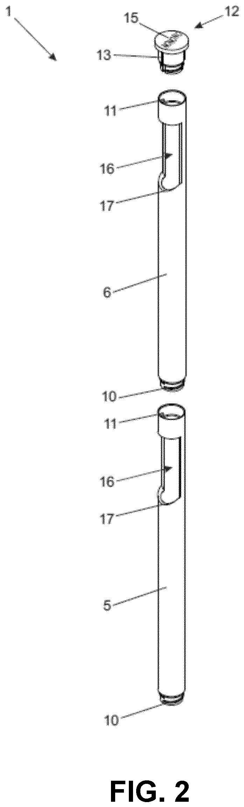

Figure 2: Blown-up perspective view of the tower formed by overlaid tubes with specific cavities for storing pallets with semen.

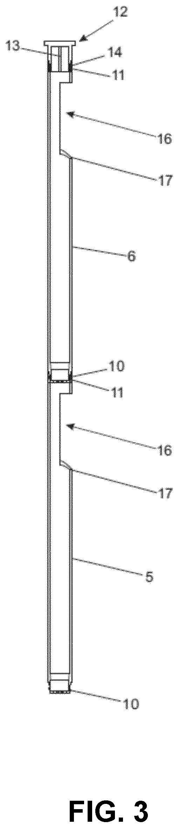

Figure 3: Cutaway side view of the tower formed by overlaid tubes with specific cavities for storing pallets with semen.

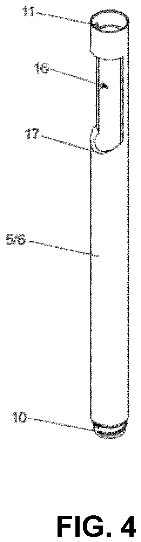

Figure 4: Perspective view of the tube tower formed by overlaid tubes with specific cavities for storing pallets with semen.

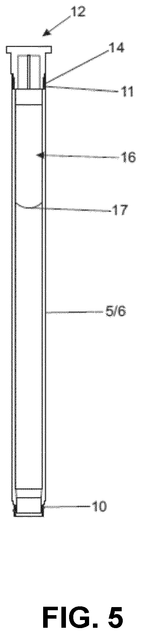

Figure 5: Cutaway front view of the tube of the tower formed by overlaid tubes with specific cavities for storing pallets with semen, with a cover.

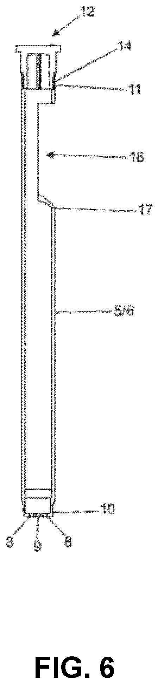

Figure 6: Cutaway side view of the tube of the tower formed by overlaid tubes with specific cavities for storing pallets with semen, with a cover.

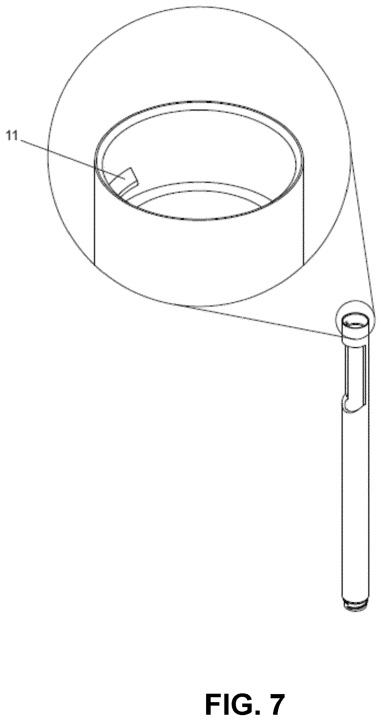

Figure 7: Perspective detail of the top end of the tube of the tower with overlaid tubes and specific cavities for storing pallets with semen.

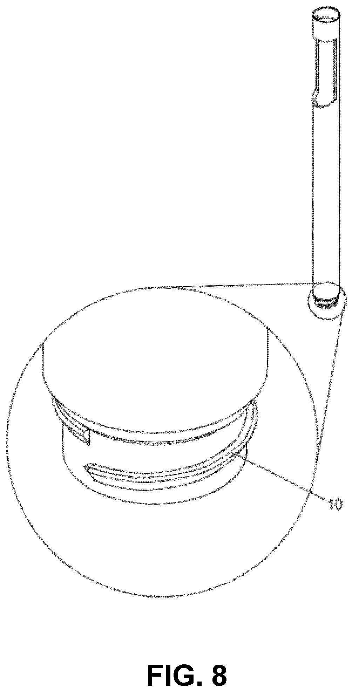

Figure 8: Perspective detail of the bottom end of the tube of the tower formed by overlaid tubes with specific cavities for storing pallets with semen.

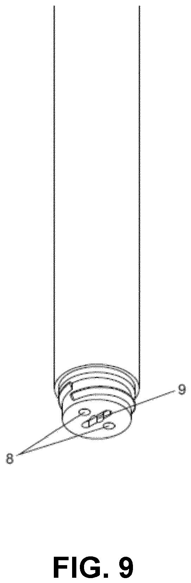

Figure 9: Bottom perspective view of the tube of the tower formed by overlaid tubes with specific cavities for storing pallets with semen, with a through- bottom.

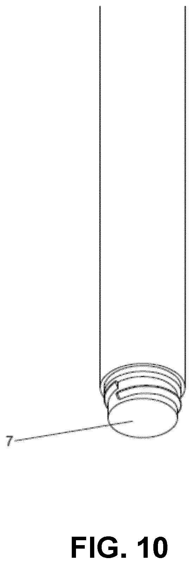

Figure 10: Bottom perspective view of the tube of the tower formed by overlaid tubes with specific cavities for storing pallets with semen, with closed end.

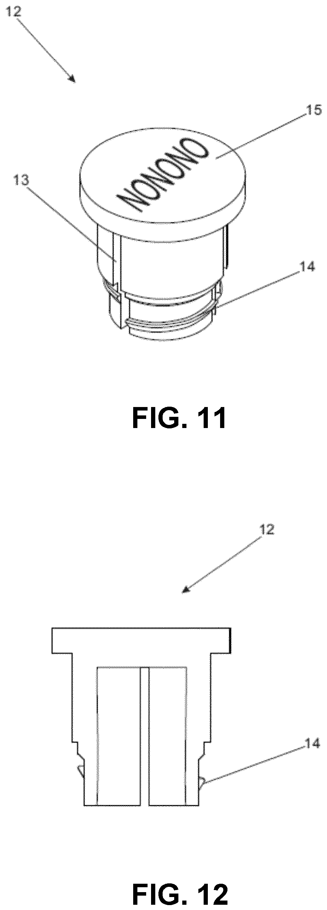

Figure 11: Perspective view of the cover of the tower formed by overlaid tubes with specific cavities for storing pallets with semen.
Figure 12: Cutaway view of the cover of the tower formed by overlaid tubes with specific cavities for storing pallets with semen.

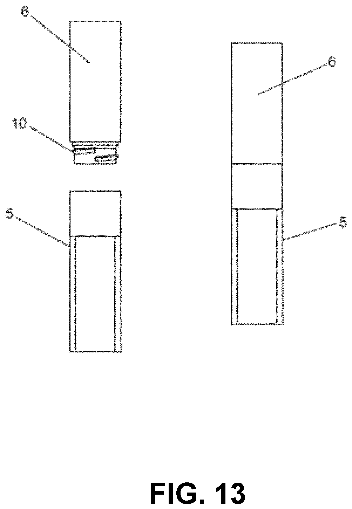

Figure 13: Schematic view illustrating the sequence of encasing the tower formed by overlaid tubes with specific cavities for storing pallets with semen.

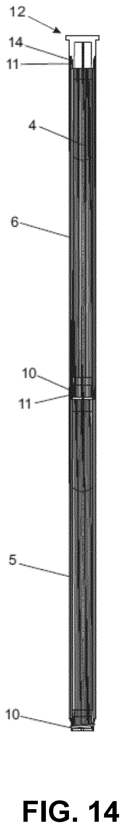

Figure 14: Cutaway side view of the tower formed by overlaid tubes with specific cavities for storing pallets with semen, showing use with the pallets.

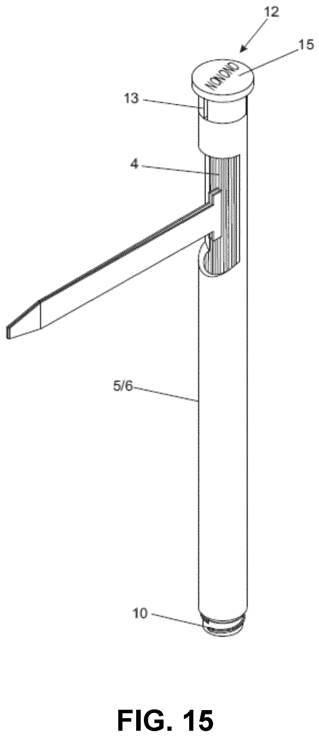

Figure 15: Schematic view illustrating withdrawal of the pallets from the side of the tube of the tower formed by overlaid tubes with specific cavities for storing pallets with semen.

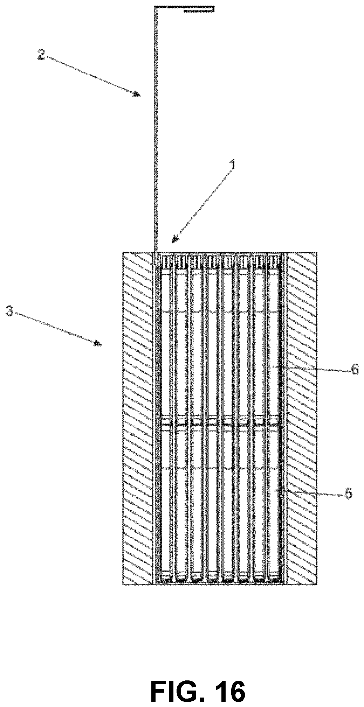

Figure 16: Cutaway side view of a canister with various towers formed by overlaid tubes with specific cavities for storing pallets with semen.

### DETAILED DESCRIPTION OF THE INVENTION

The tower formed by overlaid tubes with specific cavities for storing pallets with semen, object of this application for patent of invention, refers to a dual-function tower (1), able to be taken to the canister (2) of cryogenic cylinders (3) to freeze the semen, which consists of two tubes (5, 6) each with an oblong hollow making up a cavity (16) for easy withdrawal of the pallets (4), these tubes (5, 6) can be assembled together by means of ¼-turn threads (10, 11), such as on the cover (12), which due to their arrangement do not cause external bulges adversely affecting the automation of the process and promote perfect alignment of the cavities (16) when assembled.

More particularly, the invention consists of a tower (1) for accommodating in a canister (2) taken to cryogenic cylinders (3) to freeze the animal semen, which makes up two functions, that of packaging the pallets (4) safely and that of acting as support for said canister (2), which is formed by the overlay of two tubes (5, 6), manufactured of biodegradable polymer or not, with closed bottoms (7) or through bottoms by way of orifices (8) and slot (9) and the opposite ends open, which are manually mounted by means of ¼-turn threads, located in a lowered section on the outer edge of the inner end (10), on the inner edge of the top end (11), such that when said tubes (5, 6) are overlaid, they do not cause any type of bulge adversely affecting the automation process. Therefore, with the mounting of the ¼-turn screw of the inner edge of the top end (11) of the tube (6) with the ¼-turn screw in a lowered section on the outer edge of the bottom end (10) of the tube (5), the tower (1) is obtained, which is closed by a cover (12) with relief openings (13), chestnut-shape, equally endowed with ¼-turn thread on the recessed outer edge (14). The flat surface (15) of the cover (12), as well as the cylindrical body of the tubes (5, 6) are suitable areas for printing technical information on quantity, breed of the animal, date and tracking of the packaged product, among others. The ¼-turn (10, 11) threads used in the tubes (5, 6) and on the cover (12) provide fast and simple assembly without compromising safety, and to unpack the tubes (5, 6) and the cover (12), it is sufficient to turn them in the counter-clockwise direction. On the top wall of the body of the tubes (5, 6) is a pronounced oblong hollow making up a cavity (16) with subtle angulation (17), having a regular perimeter providing easy withdrawal of the pallets (4) with the assistance of pincers, there being no need to unplug the tubes (5, 6), without prejudice to the matter of biosecurity, consequently guaranteeing the delivery of high quality products to the consumer. The ¼-turn threads (10, 11) used in the tubes (5, 6) also promote perfect alignment of the overlaid cavities (16) upon final torque. The oblong hollow (16) also enables visualization of the pallets (4), as well as identification of the quantity thereof inside the tubes (5, 6).

## Claims

1. A tower formed by overlaid tubes with specific cavities for storing pallets with semen, comprises a tower (1) to accommodate in a canister (2) taken to cryogenic cylinders (3) for freezing animal semen in pallets (4), **characterized by** being formed by the overlay of two tubes (5, 6), made of biodegradable polymer or not, with closed bottoms (7) or through-bottoms by means of orifices (8) and slots (9) and the distal open ends mounted by means of ¼-turn threads, located in a lowered section on the outer edge of the bottom end (10), on the inner edge of the top end (11); the tower (1) is closed by a cover (12) with relief openings (13), chestnut-shaped, equally endowed with ¼-turn thread on the recessed outer edge (14); on the top wall of the body of the tubes (5, 6) is a pronounced oblong hollow making up a cavity (16) with subtle angulation (17), having a regular perimeter.
